# EUROPEAN PATENT APPLICATION

(11) **EP 1 748 170 A2**
(43) Date of publication of application: **31.01.2007**
(21) Application number: 06253912.7
(22) Date of filing: 27.07.2006
(51) Int. Cl.: F02C 7/36, F02C 7/275, F02K 3/04

(54) **PTO assembly for a gas turbine engine, gas turbine engine and method of operation of a gas turbine engine**

(30) Priority: 29.07.2005 US 161338
(71) Applicant: General Electric Company, Schenectady, NY 12345 (US)
(72) Inventor: Henry, John L., Westchester, Ohio 45069 (US); Patt, Raymond F., Cincinnati, Ohio 45215 (US)
(74) Representative: Bedford, Grant Richard

(57) **Abstract**

A PTO apparatus for a gas turbine engine (10) having first and second drive shafts (26, 28) includes a first ring gear (46) for being coupled to the first drive shaft (28) and a first bevel gear (44) engaged with the first drive gear and coupled to a PTO shaft (36). A second ring gear (52) is provided for being coupled to the second drive shaft (26). A second bevel gear (48) is engaged with the second drive gear and coupled to the PTO shaft (36) through a one-way clutch (50). A method of operating a gas turbine engine (10) includes operatively coupling a PTO shaft (36) to first and second drive shafts (28, 26) and providing a starting torque to the first and second drive shafts (28) through the PTO shaft (36). After the engine is started, power is transferred from the first drive shaft (28) to the PTO shaft (36); and the second shaft (26) is decoupled from the PTO shaft (36).

## Description

The present invention relates generally to gas turbines, and more particularly to a power take off drive assembly for a gas turbine.

A gas turbine engine includes a compressor that provides pressurized air to a combustor wherein the air is mixed with fuel and ignited for generating hot combustion gases. These gases flow downstream to one or more turbines that extract energy therefrom to power the compressor and provide useful work such as powering an aircraft in flight. In a turbofan engine, which typically includes a fan placed at the front of the core engine, a high pressure turbine powers the compressor of the core engine. A low pressure turbine is disposed downstream from the high pressure turbine for powering the fan.

In addition to providing thrust for flight, a gas turbine engine must operate additional power-absorbing accessories such as electrical generators, fuel pumps, hydraulic pumps, and the like. Accordingly, a power take off or "PTO" drive is required. Typically this is implemented by connecting a PTO shaft to the high-pressure or "core" shaft of the engine through a series of gears. The PTO shaft then drives the accessories through an accessory gear box. The engine may also be started by driving the engine core via the PTO shaft. It is not ideal in terms of engine efficiency to supply the PTO loads through the engine core rather than through the low pressure system. Furthermore, the high pressure shaft can be accelerated much faster if it is free of offtake loads. Unfortunately, the best means of starting the engine is via the high pressure shaft.

Accordingly, there is a need for a method of starting a gas turbine engine by driving the engine core and then supplying PTO loads through the low pressure system during all other operation.

The above-mentioned need is addressed by various embodiments of the present invention, which according to one aspect provides a power take off apparatus for a gas turbine engine having first and second drive shafts, including a first ring gear for being coupled to the first drive shaft; a first bevel gear engaged with the first drive gear and coupled to a power take off shaft; a second ring gear for being coupled to the second drive shaft; and a second bevel gear for being engaged with the second drive gear and coupled to the power take off shaft through a one-way clutch.

According to another aspect of the invention, a gas turbine engine includes a first compressor connected to a first turbine by a first drive shaft; a second compressor connected to a second turbine by a second drive shaft which is concentric to the first drive shaft; a first ring gear coupled to the first drive shaft; a first bevel gear engaged with the first ring gear and connected to a power take off shaft; a second ring gear coupled to the second drive shaft; a second bevel gear engaged with the second ring gear; and a one-way clutch coupling the second bevel gear to the power take off shaft. The one-way clutch is configured to permit free rotation of the second bevel gear relative to the power take off shaft in a first direction, and to prevent relative rotation of the second bevel gear relative to the power take off shaft in the opposite direction.

According to another aspect of the invention, a method of operating a gas turbine engine having first and second drive shafts includes operatively coupling a power take off shaft to the first and second drive shafts and providing a starting torque to the first and second drive shafts through the power take off shaft to start the engine; rotating the first shaft at a first operating speed in a first direction; rotating the second shaft at a second operating speed in a second direction; transferring power from the first drive shaft to the power take off shaft; and decoupling the second shaft from the power take off shaft such that substantially no power is transferred from the second drive shaft to the power take off shaft.

The invention may be best understood by reference to the following description taken in conjunction with the accompanying drawing figures in which:
Figure 1 is a cross-sectional view of an exemplary gas turbine engine incorporating a power take off assembly constructed in accordance with an embodiment of the present invention; and
Figure 2 is a cross-sectional view of a portion of the engine of Figure 1, showing the power take off assembly in more detail.

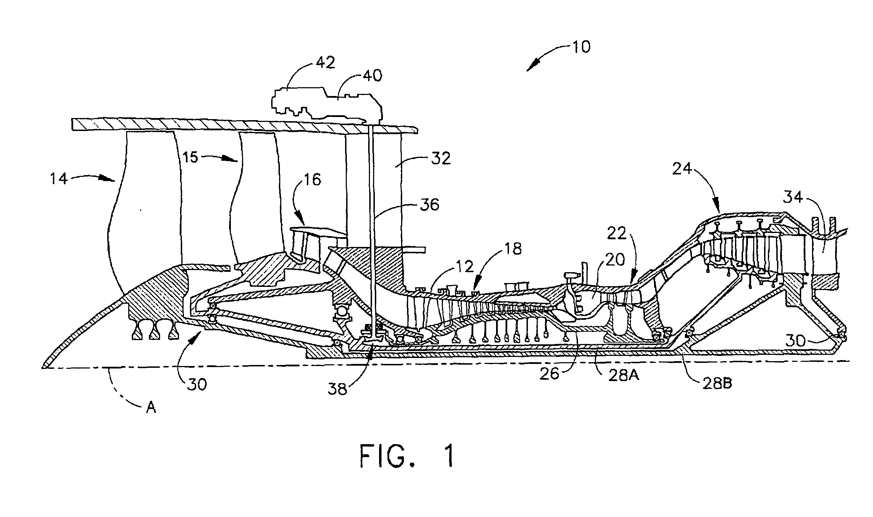

Referring to the drawings wherein identical reference numerals denote the same elements throughout the various views, Figure 1 illustrates a representative gas turbine engine, generally designated 10. The engine 10 has a longitudinal center line or axis A and an outer stationary annular casing 12 disposed concentrically about and coaxially along the axis A. The engine 10 has a front fan 14, rear fan 15, booster 16, compressor 18, combustor 20, high pressure turbine 22, and counter-rotating low pressure turbine 24 arranged in serial flow relationship. In operation, pressurized air from the compressor 18 is mixed with fuel in the combustor 20 and ignited, thereby generating combustion gases. Some work is extracted from these gases by the high pressure turbine 22 which drives the compressor 18 via a high pressure drive shaft or "HP" shaft 26. The combustion gases then flow into a low pressure turbine 24, which drives the front fan 14, rear fan 15, and booster 16 via first and second counter-rotating low pressure drive shafts or "LP" shafts 28A and 28B disposed concentrically to the HP shaft 26. The fans 14 and 15 provide the majority of the thrust produced by the engine 10, while the booster 16 is used to supercharge the air entering the compressor 18. The HP and LP shafts 26, 28A, and 28B are rotatably mounted in bearings 30 which are themselves mounted in one or more structural frames 32 and 34.

A power take off or "PTO" shaft 36 is rotatably mounted in the structural frame 32. It extends from the central portion of the engine radially outwards. Its inner end is coupled to the engine through a PTO assembly 38, and its outer end is coupled to an accessory gearbox 40 of a known type. The accessory gearbox 40 contains gears which receive engine torque from the PTO shaft 36 and transmit it to one or more components referred to as "accessories", such as electrical generators or alternators, hydraulic pumps, fuel pumps, and the like.

The PTO shaft 36 may also be used to transmit torque from an engine starter 42 mounted on the accessory gearbox 40 to the engine 10.

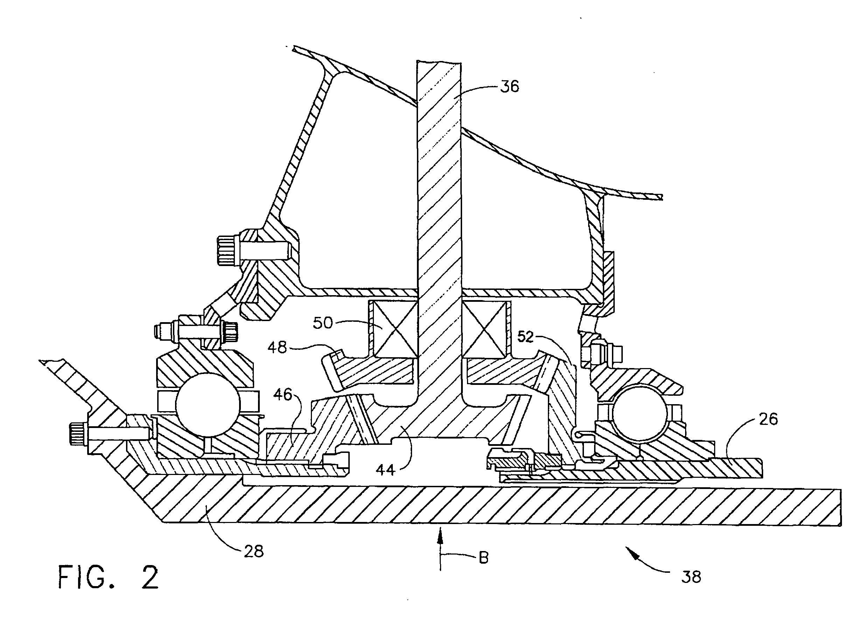

Figure 2 illustrates the PTO assembly 38 in more detail. The PTO shaft 36 carries an LP bevel gear 44. The LP bevel gear 44 engages a complementary LP ring gear 46 which is coupled to the first LP shaft 28A. The PTO shaft 36 also carries an HP bevel gear 48, coupled thereto by a one-way clutch 50 of a known type such as a sprag or roller clutch. As viewed in the direction of arrow "B" in Figure 2, the one-way clutch 50 is oriented so that it permits free rotation of the PTO shaft 36 in a counter-clockwise direction relative to the HP bevel gear 48 and engages or "locks up" to the HP bevel gear when the PTO shaft 36 is rotated in a clockwise direction. The HP bevel gear 48 engages a complementary HP ring gear 52 which is coupled to the HP shaft 26. In the illustrated example, the HP shaft 26 rotates in a first direction (for example clockwise as viewed from aft looking forward), while the first LP shaft 28A rotates the opposite direction. In other words, the HP and LP shafts 26 and 28A "counter-rotate". The PTO assembly 38 could also be arranged so as to be useable in an engine having co-rotating high and low pressure shafts (not shown), for example by reversing the orientation of the LP ring gear and moving it aft of the LP bevel gear 44. While the present invention is described with respect to a two-spool engine having LP and HP shafts 28A, 28B, and 26, it should be noted that the concept may also be applied to an engine having three or more spools by connecting the PTO shaft 36 to an intermediate pressure shaft (not shown). It is also equally applicable to an engine having only a single fan and LP shaft.

The PTO assembly 38 operates as follows. To start the engine 10, a source of power such as electrical current or compressed air is provided to the starter 42, causing it to turn the PTO shaft 36 in a first direction (clockwise in this example). The clutch 50 engages, causing the HP bevel gear 48 to turn the HP ring gear 52 and thus the HP shaft 26 in a clockwise direction. Simultaneously, the LP bevel gear 44 turns the LP ring gear 46 and thus the first LP shaft 28A in the opposite direction. This rotation of the shafts turns the rear fan 15, booster 16, and compressor 18 to induce an air flow through the engine 10.

As combustion begins and the engine 10 starts to develop its own torque, both the LP and HP shafts 28 and 26 will accelerate well above the starting speed, in opposite directions. After start the HP shaft 26 operates at a substantially higher speed than the LP shaft 28 under substantially all operating conditions. Under these conditions, the one-way clutch 50 allows the HP shaft 26 to accelerate and rotate free of any load from the PTO shaft 36. The first LP shaft 28A transmits torque to the PTO shaft 36 through the LP ring gear 46 and the LP bevel gear 44. Thus, all of the PTO power requirements are supplied by the first LP shaft 28A.

The foregoing has described a PTO assembly for a gas turbine engine, and a method for starting and engine and subsequently extracting power from the engine using the PTO assembly. While specific embodiments of the present invention have been described, it will be apparent to those skilled in the art that various modifications thereto can be made without departing from the spirit and scope of the invention. For example, this PTO assembly could be used for a wide range of applications of two or three shaft gas turbines. The PTO could be located between either compressors or turbines wherever access to the two rotors is available. Accordingly, the foregoing description of the preferred embodiment of the invention and the mode for practicing the invention are provided for the purpose of illustration only and not for the purpose of limitation, the invention being defined by the claims.

**Parts List**

| | |
|---|---|
| 10 | Gas turbine engine |
| 12 | Outer stationary annular casing |
| 14 | Front fan |
| 15 | Rear fan |
| 16 | Booster |
| 18 | Compressor |
| 20 | Combustor |
| 22 | High pressure turbine |
| 24 | Counter-rotating low pressure turbine |
| 26 | High pressure drive shaft |
| 28A | First counter-rotating low pressure drive shaft |
| 28B | Second counter-rotating low pressure drive shaft |
| 30 | Bearings |
| 32 | Structural frame |
| 34 | Structural frame |
| 36 | Power take off shaft |
| 38 | Power take off assembly |
| 40 | Accessory gearbox |
| 42 | Engine starter |
| 44 | Low pressure bevel gear |
| 46 | Low pressure ring gear |
| 48 | High pressure bevel gear |
| 50 | One-way clutch |
| 52 | Complementary high pressure ring gear |

## Claims

1. A power take off apparatus for a gas turbine engine (10) having first and second drive shafts (28, 26), comprising:
a first ring gear (46) for being coupled to said first drive shaft (28);
a first bevel gear (44) engaged with said first drive gear and coupled to a power take off shaft (36);
a second ring gear (52) for being coupled to said second drive shaft (26);
a second bevel gear (48) for being engaged with said second drive gear and coupled to said power take off shaft (36) through a one-way clutch (50).

2. The power take off apparatus of claim 1 further comprising:
an accessory gear box (40) operatively coupled to said power take off shaft (36); and
at least one power-absorbing accessory mounted to said gearbox (40) and operatively coupled to said power take off shaft (36).

3. The power take off apparatus of claim 1 further comprising:
an accessory gear box (40) operatively coupled to said power take off shaft (36); and
an engine starter (42) mounted to said gearbox (40) and operatively coupled to said power take off shaft (36).

4. A gas turbine engine (10), comprising:
a first compressor (14, 15) connected to a first turbine (24) by a first drive shaft (28A, 28B);
a second compressor (18) connected to a second turbine (22) by a second drive shaft (26) which is concentric to said first drive shaft (28A, 28B);
a first ring gear (46) coupled to said first drive shaft (28A, 28B);
a first bevel gear (44) engaged with said first ring gear (46) and connected to a power take off shaft (36);
a second ring gear (52) coupled to said second drive shaft (26);
a second bevel gear (48) engaged with said second ring gear (52); and
a one-way clutch (50) coupling said second bevel gear (48) to said power take off shaft (36), said one-way clutch (50) configured to permit free rotation of said second bevel gear (48) relative to said power take off shaft (36) in a first direction, and to prevent relative rotation of said second bevel gear (48) relative to said power take off shaft (36) in the opposite direction.

5. The gas turbine engine of claim 4 further comprising:
an accessory gear box (40) operatively coupled to said power take off shaft (36); and
an engine starter (42) mounted to said gearbox (40) and operatively coupled to said power take off shaft (36).

6. The gas turbine engine (10) of claim 4 or claim 5 wherein said first and second drive shafts (28, 26) are adapted to co-rotate during engine operation.

7. The gas turbine engine (10) of claim 4 or claim 5 wherein said first and second drive shafts (28, 26) are adapted to counter-rotate during engine operation.

8. The gas turbine engine of any one of claims 4 to 7 wherein:
said first drive shaft (28A, 28B) connects a low-pressure compressor (14, 15, 16) to a low-pressure turbine (24), and
said second drive shaft (26) connects a high-pressure compressor (18) to a high-pressure turbine (22).

9. The gas turbine engine (10) of any one of claims 4 to 8 wherein said first bevel gear (44) is disposed coaxially to said second bevel gear (48).

10. A method of operating a gas turbine engine (10) having first and second drive shafts (28, 26), comprising:
operatively coupling a power take off shaft (36) to said first and second drive shafts (28, 26) and providing a starting torque to said first and second drive shafts (26, 28) through said power take off shaft (36) to start said engine;
rotating said first shaft (28) at a first operating speed in a first direction;
rotating said second shaft (26) at a second operating speed in a second direction;
transferring power from said first drive shaft (28) to said power take off shaft (36); and
decoupling said second shaft (26) from said power take off shaft (36) such that substantially no power is transferred from said second drive shaft (26) to said power take off shaft (36).
